# EUROPEAN PATENT APPLICATION

(11) **EP 4 744 940 A1**
(43) Date of publication of application: **20.05.2026**
(21) Application number: 24847494.2
(22) Date of filing: 10.01.2024
(51) Int. Cl.: B60L 15/20

(54) **MOTOR CONTROLLER, POWERTRAIN, AND VEHICLE**

(30) Priority: 31.07.2023 CN 202310962300
(71) Applicant: Huawei Digital Power Technologies Co., Ltd., Shenzhen, Guangdong 518043 (CN)
(72) Inventor: YANG, Peng, Shenzhen, Guangdong 518043 (CN); HU, Chenhui, Shenzhen, Guangdong 518043 (CN); ZHAO, Yu, Shenzhen, Guangdong 518043 (CN); QIAO, Sen, Shenzhen, Guangdong 518043 (CN)
(74) Representative: Maiwald GmbH
(86) International application number: PCT/CN2024/071663
(87) International publication number: WO 2025/025523

(57) **Abstract**

This application discloses a motor controller, a powertrain, and a vehicle. The motor controller is used in a drive motor, and the motor controller includes a control apparatus and an inverter circuit. The control apparatus is configured to receive a braking signal of the vehicle, a rotational speed signal of the drive motor, and a torque signal of the drive motor. The control apparatus is further configured to: determine that the vehicle is approaching a stop state and needs to park in response to that a rotational speed indicated by the rotational speed signal is greater than zero and less than a preset rotational speed; and output a first control signal in response to that a braking force indicated by the braking signal is equal to zero and torque indicated by the torque signal is equal to zero, to avoid conflict with an operation manner intended by a driver. The first control signal is used to control the rotational speed of the motor to decrease to implement parking. In this application, the motor controller determines vehicle information and performs rotational speed control on the motor. Therefore, a control path is shorter, and a response speed is faster, to implement quick and accurate parking.

## Description

### CROSS-REFERENCE TO RELATED APPLICATIONS

This application claims priority to Chinese Patent Application No. 202310962300.7, filed with the China National Intellectual Property Administration on July 31, 2023 and entitled "MOTOR CONTROLLER, POWERTRAIN, AND VEHICLE", which is incorporated herein by reference in its entirety.

### TECHNICAL FIELD

This application relates to the field of new energy vehicles, and in particular, to a motor controller, a powertrain, and a vehicle.

### BACKGROUND

In recent years, new energy vehicles have become a main direction of transformation and development of the global automobile industry and an important engine for promoting the sustained growth of the world economy. With increasing popularity of the new energy vehicles and diversification of road conditions and parking lots, a parking function has become a main research direction of manufacturers.

When a conventional vehicle is parked, a surrounding environment of the vehicle is usually sensed by using various sensors such as a radar, a laser, a sonar, and a camera, and then parking is implemented in combination with an automatic parking Autohold function and an electrical park brake (Electrical Park Brake, EPB) system.

However, the above two parking manners have high requirements on the vehicle and are not applicable to the vehicle without the Autohold function or the EPB system. In addition, the two parking manners require driver operations and have long control links. This results in delayed parking and poor parking effect.

Therefore, how to quickly and accurately control vehicle parking is an urgent problem to be resolved.

### SUMMARY

This application provides a motor controller, a powertrain, and a vehicle, to quickly and accurately control vehicle parking.

According to a first aspect, an embodiment of this application provides a motor controller, used in a drive motor. The motor controller includes a control apparatus and an inverter circuit. The control apparatus is configured to receive a braking signal, a rotational speed signal, and a torque signal. The braking signal indicates a braking force of a vehicle, the rotational speed signal indicates a rotational speed of the drive motor, and the torque signal indicates torque of the drive motor.

The control apparatus is configured to output a first control signal in response to that the braking force indicated by the braking signal is equal to zero, the rotational speed indicated by the rotational speed signal is greater than zero and less than a preset rotational speed, and the torque indicated by the torque signal is equal to zero.

A reason lies in that when the braking force indicated by the braking signal is equal to zero, it may be determined that a driver does not brake or pull a handbrake. If the braking force indicated by the braking signal is not equal to zero, that the control apparatus implements parking by reducing the rotational speed conflicts with a braking manner intended by the driver.

Then, when the torque indicated by the torque signal is equal to zero, it may be determined that the driver does not press an accelerator. This avoids a conflict between a rotational speed control parking manner and a parking manner intended by the driver. For example, when the vehicle is going uphill, the driver presses the accelerator, and the vehicle presses the slope in a torque control manner.

In addition, when the rotational speed indicated by the rotational speed signal is greater than zero and less than the preset rotational speed, it may be determined that the vehicle is approaching a stop state, that is, there is a parking requirement in a current scenario.

In actual application, the control apparatus may output the first control signal to control the inverter circuit. For example, in response to the first control signal, the inverter circuit controls a switching transistor of each bridge arm in the inverter circuit to be turned on or off, to output a first drive current to the drive motor. The first drive current is used to reduce the rotational speed of the drive motor.

It should be noted that setting of the preset rotational speed should approach to zero and reflect that the vehicle is approaching a braking state.

In addition, in comparison with a conventional technology in which the motor controller obtains motor information, a vehicle controller formulates a parking policy, and then delivers the parking policy to the motor controller to implement the parking policy, a parking policy in this application is formulated and implemented by the motor controller, a control path is shorter, and response time is shorter. In addition, for obtaining various motor signals, compared with the vehicle controller, the motor controller belongs to near-end control. Therefore, an obtained signal is not easy to deviate, and vehicle parking can be controlled more accurately.

In a possible implementation, the control apparatus is configured to output the first control signal in response to that the braking signal, the torque signal, and the rotational speed signal meet a first preset condition. The first preset condition includes: The braking force indicated by the braking signal is equal to zero, the torque indicated by the torque signal is equal to zero, the rotational speed indicated by the rotational speed signal is greater than zero and less than the preset rotational speed, and the rotational speed indicated by the rotational speed signal continuously decreases within first preset duration.

For example, the driver does not press the brake or the accelerator, and the motor rotational speed is small when the vehicle is approaching the stop state, and the rotational speed decreases continuously due to an action of friction. In this case, the control apparatus accurately determines that the driver has a parking requirement, and accelerates parking by reducing the motor rotational speed.

It may be understood that if the rotational speed indicated by the rotational speed signal is greater than zero and less than the preset rotational speed, the rotational speed indicated by the rotational speed signal continuously increases within the first preset duration, the braking force indicated by the braking signal is equal to zero, and the torque indicated by the torque signal is equal to zero, it may be determined that there is no parking requirement for the driver in this working condition.

For example, in a scenario in which the vehicle is on a slope, the driver intends to slide downhill without parking. Because the driver does not press the brake or the accelerator, the rotational speed is small at the beginning, but the motor rotational speed continuously increases during a slope sliding process. Therefore, a parking control strategy should not be applied, to avoid conflict with an intention of the driver.

In a possible implementation, the control apparatus outputs the first control signal in response to that the control apparatus sequentially receives a braking signal indicating that the braking force is greater than or equal to a preset braking force and a braking signal indicating that the braking force is zero, and the braking signal indicating that the braking force is zero, the torque signal and the rotational speed signal meet a second preset condition. The second preset condition includes: Duration of the braking signal indicating that the braking force is zero is longer than second preset duration, the torque that is of the drive motor and that is indicated by the torque signal is equal to zero within the second preset duration, and the rotational speed that is of the drive motor and that is indicated by the rotational speed signal is greater than zero and less than the preset rotational speed within the second preset duration.

It may be understood that, when the rotational speed is small, it only indicates that the vehicle is approaching the stop state, and whether the driver has a braking intention or a parking intention cannot be accurately determined. Therefore, the intention of the driver may be further determined based on the duration of the braking signal indicating that the braking force is zero.

Generally, if the driver intends to brake temporarily, after the brake is released, the vehicle is further driven to travel by pressing the accelerator, and the motor rotational speed continues to increase. If the driver intends to park the vehicle for a long time, after the brake is released, the vehicle is not driven to travel, and the motor rotational speed approaches to zero. Therefore, in this working condition, the vehicle can be parked through rotational speed control.

For example, in a scenario of yielding to a pedestrian, the driver brakes temporarily, and the braking force is not zero. After the pedestrian passes, the driver releases the brake, and the braking force is zero, but the driver has not pressed the accelerator. However, a current working condition has met conditions of zero braking force, zero torque and close to zero rotational speed. If the vehicle is parked through the motor rotational speed control, it is obviously contrary to the intention of the driver to continue driving.

Within the second preset duration, if the braking force indicated by the braking signal is continuously zero, and the torque indicated by the torque signal is also continuously zero, it indicates that the driver does not press the accelerator and has no intention of continuing driving. Therefore, motor rotational speed control may be triggered to park the vehicle.

In a possible implementation, in response to that the rotational speed indicated by the rotational speed signal is greater than or equal to the preset rotational speed in the process of outputting the first control signal, the control apparatus is configured to stop outputting the first control signal.

It may be understood that in a process of controlling the motor rotational speed to implement parking, the motor rotational speed does not decrease but increases. This indicates that the rotational speed control cannot be implemented in a rotational speed control manner. Therefore, the rotational speed control needs to be exited, and parking is implemented in another manner.

For example, in a scenario of parking a vehicle on a slope, if the vehicle continues to slide after the rotational speed control is performed, the motor rotational speed continuously increases until the preset rotational speed is exceeded. This indicates that the rotational speed control cannot enable the vehicle to maintain a parking state stably. Therefore, the rotational speed control needs to be exited, and parking is implemented in another manner.

In a possible implementation, in response to a process of outputting the first control signal, if the torque indicated by the torque signal is greater than zero, the control apparatus is configured to stop outputting the first control signal, and output a second control signal.

It should be noted that the second control signal is used to control the inverter circuit to output the second drive current. The second drive current is used to adjust output torque of the drive motor to the torque indicated by the torque signal.

It may be understood that, in a process in which the control apparatus outputs the first control signal, if the torque indicated by the torque signal is greater than or equal to the preset torque, it indicates that required torque of the vehicle is large. In this case, the control apparatus needs to exit the rotational speed control and respond to a torque requirement of the vehicle, to avoid conflict with the intention of the driver.

For example, if the driver does not want to continue parking and wants to control the vehicle to travel, the accelerator pedal is pressed, and the control apparatus needs to exit the rotational speed control and control the vehicle to travel based on the torque indicated by the torque signal.

Alternatively, when the vehicle is on a slope, the driver wants to park the vehicle through torque control and presses the accelerator pedal. At this time, the control apparatus needs to exit the rotational speed control and control the vehicle to park on the slope based on the torque indicated by the torque signal.

In a possible implementation, in response to that the braking force indicated by the braking signal is greater than zero in the process of outputting the first control signal, the control apparatus is configured to stop outputting the first control signal.

It may be understood that, in the process in which the control apparatus outputs the first control signal, if the braking force indicated by the braking signal is greater than zero, it indicates that the driver performs an operation like pressing the brake or pulling the handbrake. In this case, the rotational speed control should be exited to avoid conflict with the intention of the driver.

It should be noted that, in a process of controlling the rotational speed of the drive motor to decrease, the driver presses the brake to park the vehicle. Because the brake is just pressed, the braking force is small and does not reach the preset braking force. However, if the rotational speed control is exited after the braking force is greater than the preset braking force, a switching speed of the control strategy is slow. This affects parking effect. Therefore, the control apparatus should exit the rotational speed control when the braking force is greater than zero.

For example, when a special road condition occurs in the process of controlling the rotational speed of the drive motor to decrease, the driver presses the brake, and at this time the control apparatus needs to exit the motor rotational speed control. Further, if the driver presses the brake pedal, an automatic parking function of the vehicle is enabled. A vehicle electronic stability program (Electronic Stability Program, ESP) maintains brake pressure at a wheel end and automatically parks the vehicle without the need to put into a parking gear, pull the handbrake, or activate an electrical park brake (Electrical Park Brake, EPB) system.

In a possible implementation, the control apparatus receives a first gear signal in a process of outputting the first control signal, and the control apparatus is configured to stop outputting the first control signal. A gear indicated by the first gear signal is a P gear.

For example, the driver puts into the parking gear to activate the EPB, and vehicle braking is controlled by using a brake caliper motor, to implement parking stably. In this working condition, the control apparatus needs to exit the motor rotational speed control to avoid a control manner conflict.

In a possible implementation, in response to that duration of outputting the first drive current by the inverter circuit is greater than third preset duration, the control apparatus is configured to stop outputting the first control signal.

It may be understood that if the output duration of the first drive current is excessively long, it indicates that parking cannot be implemented in a manner of controlling the rotational speed, and the drive current is continuously output, and the system has a risk of generating heat. Therefore, in this working condition, the rotational speed control should be exited.

In a possible implementation, the control apparatus is configured to stop outputting the first control signal in response to that duration in which the rotational speed indicated by the rotational speed signal is zero and the torque indicated by the torque signal is not zero is greater than preset duration in the process of outputting the first control signal.

It may be understood that, in a process in which the control apparatus outputs the first control signal, if motor stall occurs, and a stall state lasts for a period longer than fourth preset duration, the control apparatus needs to exit the rotational speed control, to avoid a risk of generating heat due to excessively long motor stall time.

For example, in a scenario in which the vehicle is parked on a slope, the vehicle is parked for a long time, the motor still continuously outputs torque when the rotational speed is zero, and the motor continuously generates heat. In this working condition, the control apparatus needs to exit the rotational speed control, and parking is implemented in another manner.

It should be understood that the fourth preset duration may be set based on motor performance and an entire vehicle requirement. This is not limited herein.

In a possible implementation, in response to that amplitude of the first drive current is greater than preset amplitude, the control apparatus is configured to stop outputting the first control signal.

It may be understood that if the amplitude of the first drive current is greater than the preset amplitude, it indicates that it is difficult to park the vehicle through the rotational speed control, and an excessively large current may cause the motor controller to generate heat. Therefore, in this working condition, the control apparatus needs to exit the rotational speed control, and parking is implemented in another manner.

In a possible implementation, the torque signal comes from any one of the accelerator pedal sensor, the accelerator pedal controller, and the vehicle controller unit.

In a possible implementation, the control apparatus may receive a braking signal from the vehicle controller unit. In addition, the control apparatus may directly obtain a braking signal from the braking controller, to shorten a control path and improve a braking response speed, thereby quickly controlling the vehicle to enter a parking state.

In a possible implementation, a rotational speed sensor is disposed in the drive motor, and the rotational speed sensor is configured to collect the rotational speed signal.

For example, the rotational speed sensor may be a motor resolver. In actual application, motor rotational speed information may be obtained by using a motor resolver signal of the motor resolver, so as to obtain a shorter control link, and rotational speed control is quickly and accurately implemented by using high resolution and high real-time features of the motor resolver signal.

In a possible implementation, the control apparatus is configured to output a braking request signal to the braking controller in response to that the rotational speed indicated by the rotational speed signal is greater than or equal to the preset rotational speed in a process of outputting the first control signal.

In a possible implementation, in response to that the rotational speed indicated by the rotational speed signal is greater than or equal to the preset rotational speed in the process of outputting the first control signal, the control apparatus is configured to output a gear control signal to the gear controller. The gear control signal is used to control the vehicle to operate in the parking gear.

It may be understood that, in a process in which the control apparatus outputs the first control signal, if the motor rotational speed does not decrease but increases, or even is greater than or equal to the preset rotational speed, it indicates that parking cannot be implemented through the rotational speed control. Therefore, rotational speed control needs to be exited, and another control manner is further required to assist parking.

According to a second aspect, an embodiment of this application further provides a powertrain, and the powertrain includes the motor controller according to any one of the first aspect and a drive motor.

According to a third aspect, an embodiment of this application further provides a vehicle. The vehicle includes a power battery and the powertrain according to the second aspect. The power battery is configured to supply power to an inverter circuit of the powertrain.

It should be understood that mutual reference may be made to implementations and beneficial effect of the foregoing aspects of this application.

### BRIEF DESCRIPTION OF DRAWINGS

FIG. 1 is a diagram of a structure of a motor controller according to an embodiment of this application;
FIG. 2 is a schematic of a structure of an inverter circuit according to an embodiment of this application;
FIG. 3a is a diagram of an architecture of a vehicle control system according to an embodiment of this application;
FIG. 3b is a diagram of an architecture of another vehicle control system according to an embodiment of this application;
FIG. 4 is a control time sequence diagram of a motor controller according to an embodiment of this application;
FIG. 5a is a control time sequence diagram of another motor controller according to an embodiment of this application;
FIG. 5b is a control time sequence diagram of still another motor controller according to an embodiment of this application;
FIG. 6a is a control time sequence diagram of still another motor controller according to an embodiment of this application;
FIG. 6b is a control time sequence diagram of still another motor controller according to an embodiment of this application;
FIG. 7a is a control time sequence diagram of still another motor controller according to an embodiment of this application;
FIG. 7b is a control time sequence diagram of still another motor controller according to an embodiment of this application;
FIG. 8a is a control time sequence diagram of still another motor controller according to an embodiment of this application;
FIG. 8b is a control time sequence diagram of still another motor controller according to an embodiment of this application;
FIG. 8c is a control time sequence diagram of still another motor controller according to an embodiment of this application;
FIG. 9 is a control time sequence diagram of still another motor controller according to an embodiment of this application;
FIG. 10 is a control time sequence diagram of still another motor controller according to an embodiment of this application;
FIG. 11 is a control time sequence diagram of still another motor controller according to an embodiment of this application;
FIG. 12 is a control time sequence diagram of still another motor controller according to an embodiment of this application;
FIG. 13a is a diagram of a structure of a powertrain according to an embodiment of this application;
FIG. 13b is a diagram of a structure of another powertrain according to an embodiment of this application;
FIG. 14 is a diagram of a structure of a vehicle according to an embodiment of this application; and
FIG. 15A and FIG. 15B are a flowchart of a parking method according to an embodiment of this application.

### DESCRIPTION OF EMBODIMENTS

To make objectives, technical solutions, and advantages of this application clearer, the following clearly and completely describes the technical solutions of embodiments of this application with reference to accompanying drawings in embodiments of this application.

For ease of understanding embodiments of this application, the following first describes terms included in embodiments of this application.

### 1. Vehicle electronic stability program (Electronic Stability Program, ESP)

The ESP is mainly used to analyze vehicle information sent from each sensor. If a driver has enabled an automatic parking function, the ESP continues to maintain brake hydraulic pressure at a wheel end after the driver presses a brake pedal, and control a hydraulic braking system, to park the vehicle. For example, the ESP implements braking by clamping a brake caliper or a brake disc by using hydraulic pressure of a hydraulic system.

### 2. Electrical park brake (Electrical Park Brake, EPB) system

The EPB is mainly used to control parking brake based on an electronic circuit. A function is similar to that of a mechanical pull rod handbrake. Specifically, after the driver puts into a P gear and activates the EPB, a controller of the EPB sends an instruction to clamp a rear wheel brake caliper by using a locking motor. For example, the driver pulls a handbrake, and the EPB brakes the vehicle by using the motor against a brake disc.

### 3. Vehicle controller unit (Vehicle Controller Unit, VCU)

The vehicle controller unit is mainly used to collect motor and battery statuses, an accelerator pedal signal, a brake pedal signal, and another executor, sensor, and controller signals, and comprehensively analyze and make corresponding judgment based on a driving intention of the driver, and monitor an action of a controller of each component at a lower layer. Therefore, a normal and stable operation of the entire vehicle with good power performance, high economy, and high reliability is ensured.

### 4. Automatic gear

Automatic gears are generally divided into four gears: P, R, N and D, which represent positions where a gearshift lever is shifted. The P gear is a parking gear. The R gear is a reverse gear. The N gear is a neutral gear. The D gear is a forward gear.

To make objectives, technical solutions, and advantages of this application clearer, the following further describes this application in detail with reference to an application background.

As the global automobile industry is developing towards electrification, intelligence, networking and sharing, consumers have increasingly high quality requirements and consumption experience for electric vehicle products. A parking function of the vehicle is an important function that affects driving comfort of a customer.

However, a conventional parking function has various defects, such as single application scenario, high vehicle configuration requirements, and untimely parking response.

An automatic parking Autohold function is used as an example. When the Autohold function is enabled, after the driver presses the brake pedal to stop the vehicle, the ESP continues to maintain the brake hydraulic pressure at the wheel end and controls the vehicle to implement parking through the hydraulic braking system.

An EPB function is used as an example. The EPB function is activated after the vehicle is manually stopped. Alternatively, after receiving the vehicle information sent by each sensor, the vehicle controller unit formulates a control policy based on the vehicle information to activate the EPB function, to implement electronic parking.

It can be found that the two control manners require participation of the driver to different degrees, but a human reaction speed is far from meeting a response speed requirement of parking. In addition, the vehicle controller unit integrates information to formulate a policy. This requires more interacted hardware, and a control link is excessively long, which further affects a control delay. In addition, there are a large quantity of vehicles on the market that are not equipped with the above parking functions and consequently cannot meet parking requirements of users.

Therefore, how to implement parking quickly and accurately is an urgent problem to be resolved.

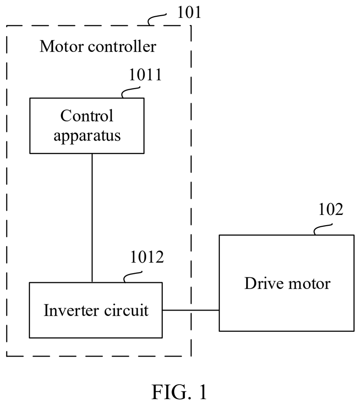

In view of the foregoing problem, an embodiment of this application provides a motor controller. As shown in FIG. 1, the motor controller 101 is used in a drive motor 102, and the motor controller 101 includes a control apparatus 1011 and an inverter circuit 1012.

The control apparatus 1011 is configured to receive a braking signal, a rotational speed signal, and a torque signal.

It should be noted that the braking signal indicates a braking force of a vehicle, the rotational speed signal indicates a rotational speed of the drive motor 102, and the torque signal indicates torque of the drive motor 102.

The control apparatus 1011 is further configured to output a first control signal in response to that the braking force indicated by the braking signal is equal to zero, the rotational speed indicated by the rotational speed signal is greater than zero and less than a preset rotational speed, and the torque indicated by the torque signal is equal to zero.

It should be noted that the first control signal output by the control apparatus 1011 is used to control the inverter circuit 1012 to output a first drive current. The first drive current is used to reduce the rotational speed of the drive motor 102.

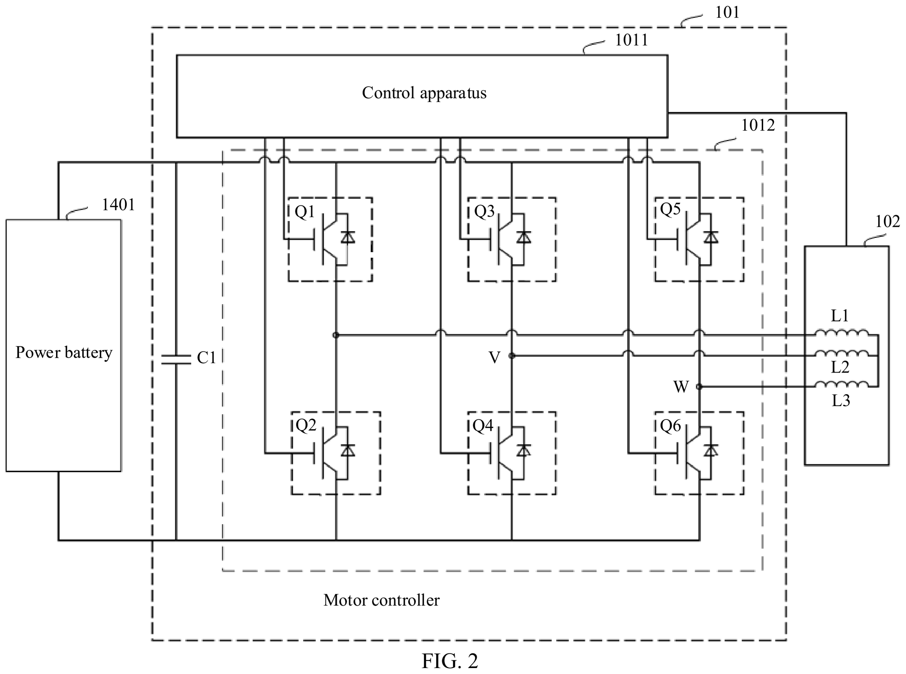

For example, as shown in FIG. 2, the inverter circuit 1012 includes switching transistors Q1 to Q6. The switching transistor Q1 and the switching transistor Q2 form a first bridge arm, the switching transistor Q3 and the switching transistor Q4 form a second bridge arm, and the switching transistor Q5 and the switching transistor Q6 form a third bridge arm. Control ends of the switching transistors Q1 to Q6 are connected to the control apparatus 1011, and the bridge arms are connected to a power battery 1401 and a capacitor C1 in parallel. A first bridge arm midpoint U, a second bridge arm midpoint V, and a third bridge arm midpoint W are respectively connected to multi-phase windings L1 to L3 of the motor.

In response to the first control signal, the inverter circuit 1012 controls the switching transistors Q1 to Q6 of the bridge arms in the inverter circuit 1012 to be turned on or off, to output the first drive current to the drive motor 102, thereby reducing the rotational speed of the drive motor 102.

It should be further noted that, when the rotational speed indicated by the rotational speed signal is greater than zero and less than the preset rotational speed, it may be determined that the vehicle is approaching a stop state, that is, there is a parking requirement in a current scenario. For example, if the driver does not press an accelerator or a brake, the motor rotational speed is 10 revolutions per minute, which is less than the preset rotational speed of 100 revolutions per minute, and the control apparatus 1011 may determine that the vehicle is approaching the stop state but does not stop. Therefore, parking may be implemented by outputting the first control signal to reduce the motor rotational speed.

If the braking force indicated by the braking signal is equal to zero, it may be determined that the driver does not brake or pull a handbrake. Conversely, if the braking force indicated by the braking signal is not equal to zero, it may be determined that the driver intends to brake. In this case, that the control apparatus 1011 implements parking by reducing the rotational speed may conflict with the intention of the driver. For example, when the vehicle encounters an obstacle on a road, the driver immediately presses the brake for safety reasons. In this case, the motor rotational speed decreases to 10 revolutions per minute, which is less than the preset rotational speed of 100 revolutions per minute, but the braking force indicated by the braking signal is not zero. Therefore, the control apparatus 1011 cannot control the motor rotational speed to decrease, otherwise, it may conflict with the intention of the driver.

If the torque indicated by the torque signal is equal to zero, it may be determined that the driver does not press the accelerator, to avoid a conflict between a rotational speed control parking manner and the intention of the driver. For example, when the vehicle slowly goes uphill, the motor rotational speed is 80 revolutions per minute, which is less than the preset rotational speed of 100 revolutions per minute. The driver presses the accelerator and intends to implement parking on a slope through torque control, and the torque indicated by the torque signal is not zero. Therefore, the control apparatus 1011 cannot control the motor rotational speed to decrease, otherwise, it may conflict with the intention of the driver. Alternatively, when the vehicle is moving off, the motor rotational speed is 10 revolutions per minute, which is less than the preset rotational speed of 100 revolutions per minute. The driver gently presses the accelerator to accelerate, and the torque indicated by the torque signal is not zero. Therefore, the control apparatus 1011 cannot control the motor rotational speed to decrease, otherwise, it may conflict with the intention of the driver.

Therefore, after each of the above response conditions is met, the control apparatus 1011 may implement parking by reducing the rotational speed.

The following describes sources of the foregoing signals with reference to an architecture of a vehicle control system.

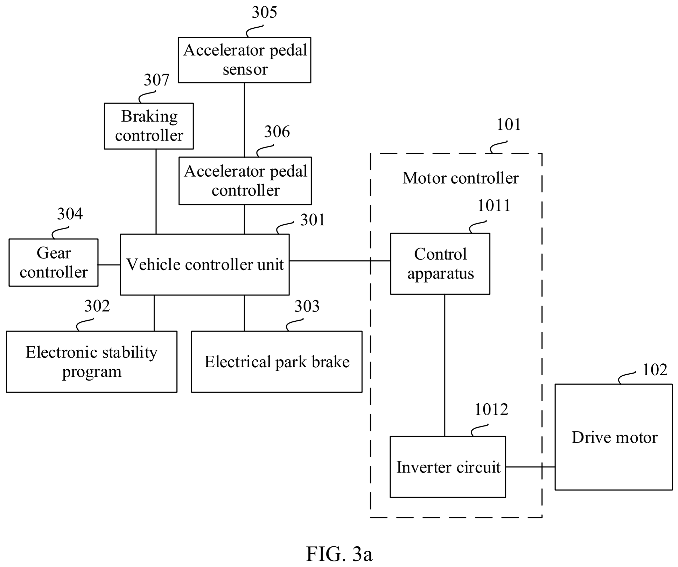

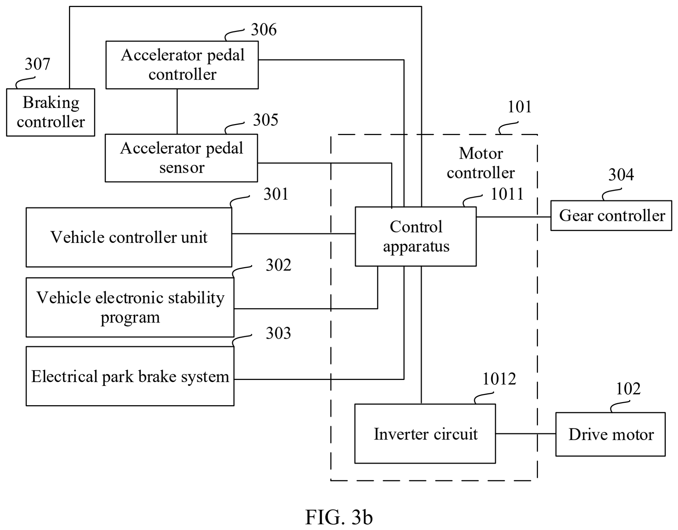

As shown in FIG. 3a and FIG. 3b, in addition to the motor controller 101, the architecture of the vehicle control system further includes a vehicle controller unit 301, a vehicle electronic stability program 302, an electrical park brake system 303, a gear controller 304, an accelerator pedal sensor 305, an accelerator pedal controller 306, and a braking controller 307.

As shown in FIG. 3a, the accelerator pedal sensor 305 establishes a communication connection with the accelerator pedal controller 306. The vehicle controller unit 301 establishes communication connections with the braking controller 307, the accelerator pedal controller 306, the gear controller 304, the vehicle electronic stability program 302, and the electrical park brake system 303. The vehicle controller unit 301 communicates directly with the control apparatus 1011.

As shown in FIG. 3b, the control apparatus 1011 of the motor controller 101 establishes communication connections with the braking controller 307, the gear controller 304, the accelerator pedal controller 306, the vehicle controller unit 301, the vehicle electronic stability program 302, and the electrical park brake system 303. The accelerator pedal sensor 305 establishes a communication connection with the accelerator pedal controller 306.

It may be understood that another hardware architecture with a same or similar concept may be derived based on a component communication and connection principle in FIG. 3a or FIG. 3b. Details are not described herein again.

In hardware configuration of the vehicle control system shown in FIG. 3a or FIG. 3b, if hardware of a signal source indirectly communicates with the motor controller 101 by using the vehicle controller unit 301, the control apparatus 1011 may receive the signal from the vehicle controller unit 301. If the hardware of the signal source directly communicates with the motor controller 101, the control apparatus 1011 may directly obtain the signal.

In a possible implementation, the torque signal comes from any one of the accelerator pedal sensor 305, the accelerator pedal controller 306, and the vehicle controller unit 301.

For example, the control apparatus 1011 may receive the torque signal from the vehicle controller unit 301, or directly obtain the torque signal from the accelerator pedal sensor 305 or the accelerator pedal controller 306, to shorten a control path and improve a braking response speed. Similarly, the control apparatus 1011 receives the braking signal from the vehicle controller unit 301, or directly obtains the braking signal from the braking controller 307. A manner of obtaining a gear control signal by the control apparatus 1011 is similar, and details are not described herein again.

In a possible implementation, a rotational speed sensor is disposed in the drive motor 102, and the rotational speed sensor is configured to collect the rotational speed signal.

For example, a motor resolver is disposed on a motor rotor. The control apparatus 1011 may obtain motor rotational speed information by obtaining a motor resolver signal of the motor resolver, to obtain a shorter control link, and quickly and accurately implement braking control by using high resolution and high real-time features of the motor resolver signal.

The motor controller 101 provided in this embodiment of this application can implement a parking function in a plurality of scenarios, and has a low requirement for vehicle configuration. Parking can be implemented without configuring an Autohold function or an EPB function in combination with the vehicle.

Then, in comparison with the conventional technology in which a vehicle parking algorithm is implemented in the vehicle electronic stability program 302 or the vehicle controller unit 301, a parking policy in this application is formulated and implemented in the motor controller, and the control path is shorter. In addition, for obtaining various types of motor signals, compared with the vehicle controller unit 301, the motor controller 101 belongs to near-end control. Therefore, an obtained signal is not easily deviated, and vehicle parking can be controlled more accurately.

Therefore, in actual application, if required torque obtained by the vehicle controller unit 301 is zero, it is determined that there is no vehicle sliding risk, and parking does not need to be performed. However, in a same road condition and vehicle condition, if the motor controller determines that the vehicle has a possibility of sliding and accuracy is higher, rotational speed braking is preferentially performed based on determination of the motor controller.

In addition, in this embodiment of this application, the controller may directly generate a rotational speed control signal, and may directly control the rotational speed of the motor without performing torque calculation. This further reduces information transmission time and has high control precision.

Through simulation experiment comparison, in comparison with the conventional technology in which the motor controller obtains motor information, the vehicle controller unit formulates the parking policy, and the motor controller implements the parking policy, a parking control delay in this application can be shortened by more than 50 ms.

The following describes functions of the motor controller 101 in detail with reference to the foregoing signal sources and different control manners.

### 1. The motor controller implements vehicle parking by controlling the rotational speed

### Embodiment 1

As shown in FIG. 1, the motor controller includes the control apparatus 1011 and the inverter circuit 1012.

The control apparatus 1011 is configured to output the first control signal in response to that the braking force indicated by the braking signal is equal to zero, the rotational speed indicated by the rotational speed signal is greater than zero and less than the preset rotational speed, and the torque indicated by the torque signal is equal to zero.

It should be noted that the first control signal output by the control apparatus 1011 is used to control the inverter circuit 1012 to output the first drive current. The first drive current is used to reduce the rotational speed of the drive motor 102.

For example, if the driver releases a brake pedal and does not press an accelerator pedal on a slope, the motor rotational speed is 10 revolutions per minute due to the slope. This indicates that the vehicle has a slope sliding working condition. The motor rotational speed is small and does not exceed the preset rotational speed of 100 revolutions per minute. This indicates that the vehicle has just started to slide downhill. Therefore, in this scenario, the vehicle needs to be controlled to stably park on the slope.

For another example, in a process in which the driver wants to slowly park the vehicle under an action of resistance, the motor rotational speed decreases to less than the preset rotational speed of 100 revolutions per minute. Therefore, the motor controller can control the motor rotational speed to decrease, to shorten braking duration and accelerate response to parking.

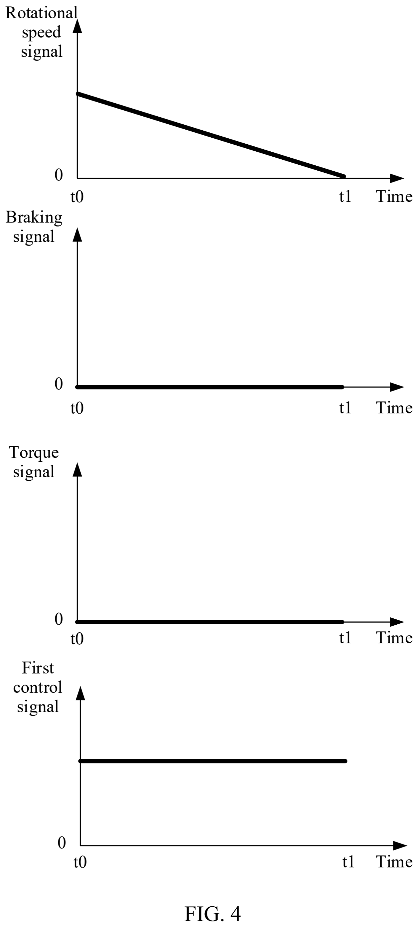

For example, in a control time sequence diagram shown in FIG. 4, at a moment t0, the braking force indicated by the braking signal is equal to zero, the rotational speed indicated by the rotational speed signal is greater than zero and less than the preset rotational speed, and the torque indicated by the torque signal is equal to zero. The control apparatus 1011 responds and starts to output the first control signal.

Further, under control of the first control signal, the rotational speed decreases continuously, and the rotational speed decrease signal indicating the rotational speed also decreases continuously. At a moment t1, the rotational speed of the drive motor 102 decreases to zero.

The motor controller in this embodiment of this application accurately determines, based on the rotational speed indicated by the rotational speed signal, whether the driver has a parking intention. This broadens application scenarios of the parking function, and improves accuracy of identifying a parking requirement. In addition, conflict with another control manner selected by the driver is avoided by combining signal strengths of the braking signal and the torque signal, and control accuracy is further improved.

### Embodiment 2

The control apparatus 1011 is configured to output the first control signal in response to that the braking signal, the torque signal, and the rotational speed signal meet a first preset condition. The first preset condition includes: The braking force indicated by the braking signal is equal to zero, the torque indicated by the torque signal is equal to zero, the rotational speed indicated by the rotational speed signal is greater than zero and less than the preset rotational speed, and the rotational speed indicated by the rotational speed signal continuously decreases within first preset duration.

For example, in a scenario in which the vehicle is on a slope, the driver intends to slide downhill without parking. Because the driver does not press the brake or the accelerator, the rotational speed is small at the beginning, but the motor rotational speed continuously increases during a slope sliding process.

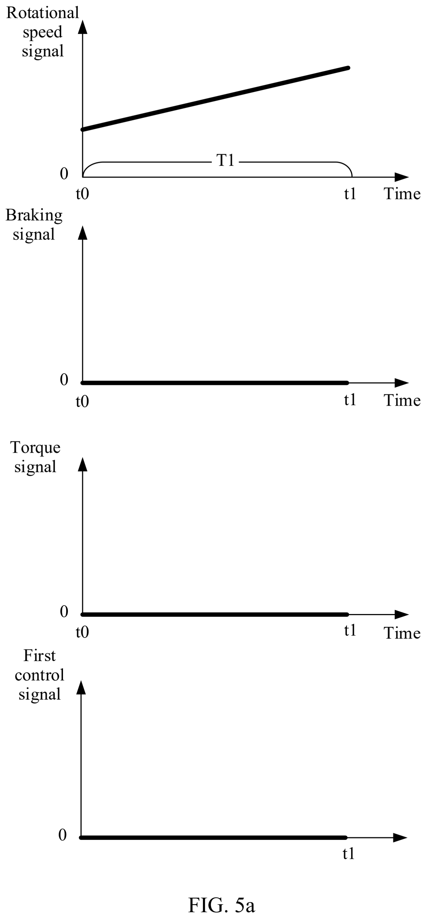

As shown in FIG. 5a, at the moment t0, the braking force indicated by the braking signal is equal to zero, the torque indicated by the torque signal is equal to zero, and the rotational speed indicated by the rotational speed signal is greater than zero and less than the preset rotational speed. Within first preset duration T1, the rotational speed indicated by the rotational speed signal continuously increases. Apparently, in this scenario, if the control apparatus 1011 performs parking control, it conflicts with a driving intention of the driver. Therefore, the first control signal does not need to be output (for ease of observation, in FIG. 5a and other control time sequence diagrams, that the first control signal is zero indicates that the first control signal is not output, and details are not described again).

For example, the preset rotational speed of the motor is 100 revolutions per minute, the first preset duration T1 is 20 seconds. The driver wants to slide downhill without pressing the brake or the accelerator, and the vehicle travels by itself. The motor rotational speed continuously increases within the 20 seconds, and increases from 10 revolutions per minute to 50 revolutions per minute. In this case, the control apparatus 1011 does not output the first control signal, to avoid conflict with the intention of the driver.

Therefore, it is necessary to further determine, based on a change trend of the rotational speed signal, whether the driver attempts to park the vehicle.

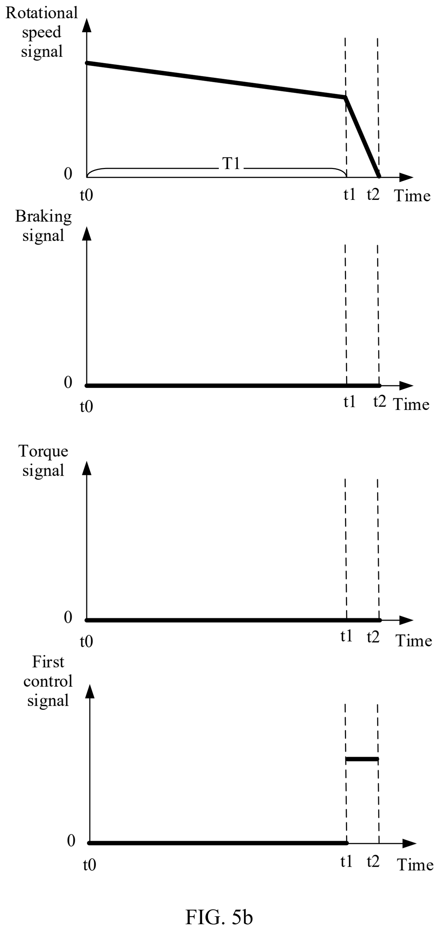

For example, as shown in FIG. 5b, at the moment t0, the driver does not press the brake or the accelerator. The braking force indicated by the braking signal is equal to zero, the torque indicated by the torque signal is equal to zero, and the rotational speed indicated by the rotational speed signal is greater than zero and less than the preset rotational speed. Within the first preset duration T1, under influence of road friction, the rotational speed indicated by the rotational speed signal continuously decreases. In this case, the control apparatus 1011 accurately determines that the driver has a parking requirement, and outputs the first control signal at the moment t1, to accelerate reduction of the motor rotational speed. The motor rotational speed decreases to zero at a moment t2 to implement parking.

For example, the preset rotational speed of the motor is 100 revolutions per minute, the first preset duration T1 is 20 seconds. The driver wants to park the vehicle by using friction without pressing the brake or the accelerator, and the vehicle travels by itself. The motor rotational speed continuously decreases within the 20 seconds, and decreases from 200 revolutions per minute to 100 revolutions per minute. The control apparatus 1011 outputs the first control signal to reduce the motor rotational speed to zero.

The motor controller in this embodiment of this application accurately determines, based on a value of the rotational speed indicated by the rotational speed signal and a change trend of the rotational speed, whether the driver has a parking intention or a driving intention. This broadens application scenarios of the parking function, and improves accuracy of identifying a parking requirement. In addition, conflict with another control manner selected by the driver is avoided by combining signal strengths of the braking signal and the torque signal, and control accuracy is further improved.

### Embodiment 3

The control apparatus 1011 is configured to output the first control signal in response to that the control apparatus 1011 sequentially receives a braking signal indicating that the braking force is greater than or equal to a preset braking force and a braking signal indicating that the braking force is zero, and the braking signal indicating that the braking force is zero, the torque signal, and the rotational speed signal meet a second preset condition. The second preset condition includes: Duration of the braking signal indicating that the braking force is zero is longer than second preset duration, the torque that is of the drive motor 102 and that is indicated by the torque signal is equal to zero within the second preset duration, and the rotational speed that is of the drive motor 102 and that is indicated by the rotational speed signal is greater than zero and less than the preset rotational speed within the second preset duration.

Generally, the zero braking force may mean that the driver wants to temporarily brake, for example, encountering an obstacle on a road, and yielding to a pedestrian. After the brake is released, the driver further drives the vehicle to continue traveling by pressing the accelerator, and the motor rotational speed continues to increase.

In addition, the zero braking force may alternatively mean that the driver wants to park for a long time. After the brake is released, the vehicle is not driven to travel, and the motor rotational speed approaches to zero.

Therefore, a vehicle condition in which the rotational speed is small can only indicate that the vehicle is approaching a stop state, and whether the driver has a braking intention or a parking intention cannot be accurately determined. Therefore, it is necessary to further determine the intention of the driver based on the duration of the braking signal indicating that the braking force is zero and a signal change.

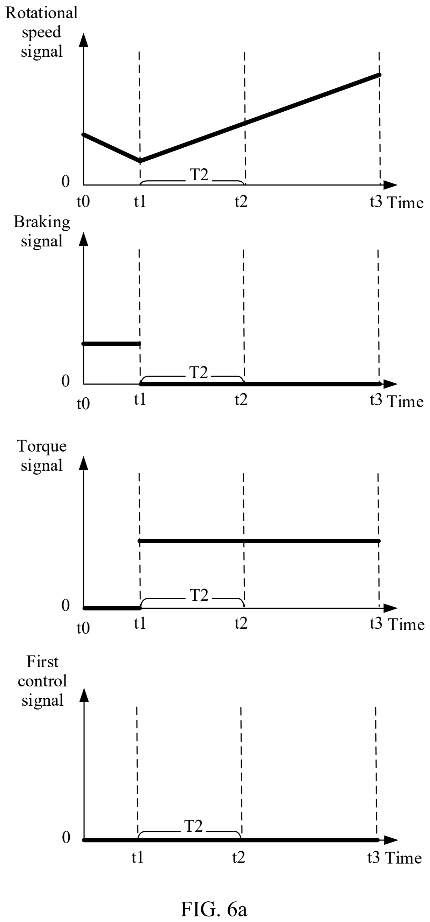

For example, in a scenario in which a pedestrian is encountered on a road, as shown in FIG. 6a, at the moment t0, the driver presses the brake to control the vehicle to decelerate. The braking force indicated by the braking signal is not zero, the rotational speed indicated by the rotational speed signal is reduced due to braking, and the torque indicated by the torque signal is zero. After the pedestrian passes, the driver releases the brake and presses the accelerator to continue driving. To be specific, at the moment t1, the braking force indicated by the braking signal is zero, the torque indicated by the torque signal is greater than zero, the rotational speed indicated by the rotational speed signal is greater than zero, and the motor rotational speed does not exceed the preset rotational speed within second preset duration T2. In this case, the control apparatus 1011 accurately determines, based on the torque signal within the second preset duration T2, that the driver has a driving requirement, and does not output the first control signal, to avoid conflict with the intention of the driver.

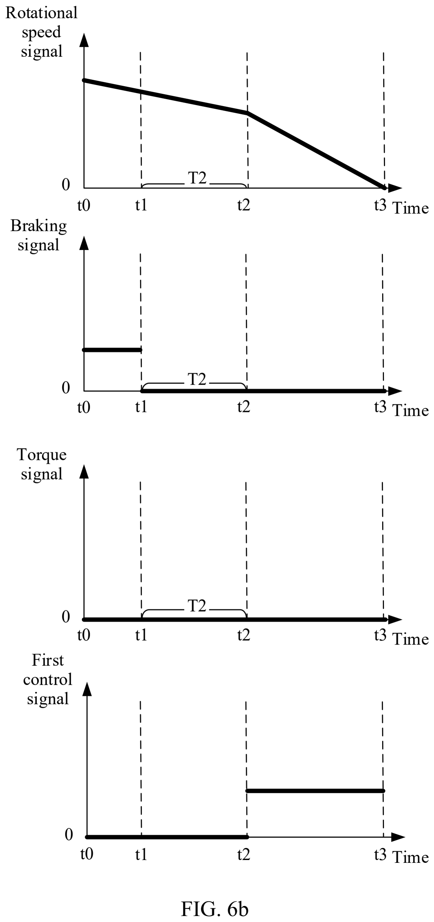

For another example, if the driver wants to park the vehicle, the driver presses the brake to control the vehicle to decelerate. When the vehicle speed is slow, to be specific, in FIG. 6b, at the moment t0, the rotational speed indicated by the rotational speed signal is greater than zero, and the rotational speed of the drive motor 102 continuously decreases within t0 to t1. In addition, the torque indicated by the torque signal is zero, and the braking force indicated by the first braking signal is not zero. If the braking force indicated by the braking signal is zero and the torque indicated by the torque signal is also zero continuously within the second preset duration T2, it indicates that the driver does not press the accelerator and has no intention to continue driving. In addition, within the second preset duration T2, the rotational speed indicated by the rotational speed signal is greater than zero and less than the preset rotational speed. This indicates that the vehicle is approaching a parking state. Therefore, the control apparatus 1011 outputs the first control signal at the moment t2, to control the rotational speed of the motor to decrease, so as to implement parking quickly and accurately.

The motor controller in this embodiment of this application accurately determines, based on change trends of the rotational speed signal, the braking signal, and the torque signal, whether the driver has a parking intention or a driving intention, and avoids conflict with another control manner selected by the driver. This broadens application scenarios of the parking function, and improves accuracy of identifying a parking requirement.

### 2. When the motor controller cannot implement parking by controlling the rotational speed, another control manner is assisted to implement parking

First, a vehicle condition in which parking cannot be implemented through rotational speed control is described in embodiments.

### Embodiment 1

The control apparatus 1011 is configured to stop outputting the first control signal in response to that duration of outputting the first drive current by the inverter circuit 1012 is greater than third preset duration.

It may be understood that, in a process in which the motor controller controls the rotational speed of the drive motor 102 to decrease to implement parking of the electric vehicle, if the output duration of the first drive current is excessively long, it indicates that it is difficult for the motor controller to control the motor rotational speed to decrease, and therefore difficult to implement parking. In addition, if the drive current is continuously output, a system has a risk of generating heat. Therefore, in this working condition, the rotational speed control should be exited.

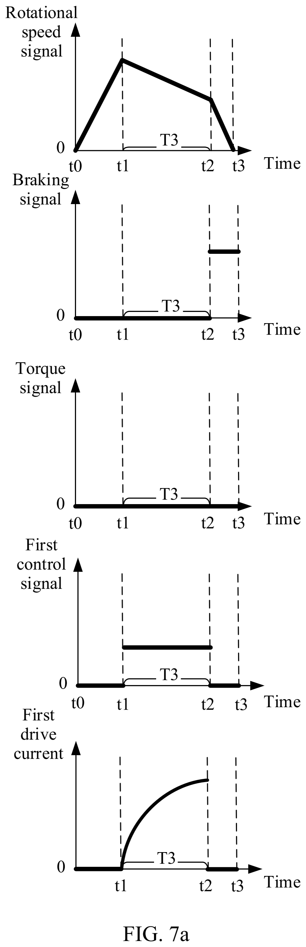

For example, when the electric vehicle is on a slope, the electric vehicle has an obvious tendency to slide downhill due to the steep slope. As shown in FIG. 7a, at the moment t0, the vehicle starts to slide, and the motor rotational speed indicated by the rotational speed signal gradually increases. At the moment t1, the braking force indicated by the braking signal is equal to zero, the rotational speed indicated by the rotational speed signal is greater than zero and less than the preset rotational speed, and the torque indicated by the torque signal is equal to zero. The control apparatus 1011 starts to output the first control signal until the moment t2. Duration of outputting the first control signal by the control apparatus 1011 exceeds the third preset duration T3. This indicates that the motor controller outputs the first drive current for a long time, but the vehicle cannot be parked on the slope through rotational speed control of the control apparatus 1011.

Therefore, if the rotational speed control is not exited and the vehicle is not parked on the slope in another control manner, there is a risk of slope sliding and a risk of overheating of the system. Therefore, at the moment t2, the control apparatus 1011 stops outputting the first control signal, and the first drive current decreases to zero. Further, the control apparatus 1011 may control vehicle parking in another manner. For example, as shown in FIG. 7a, at the moment t2, the vehicle is parked in a braking system control manner, the braking force indicated by the braking signal is greater than zero, the torque indicated by the torque signal is zero, and the rotational speed indicated by the rotational speed signal gradually decreases to zero, to park the vehicle stably.

For example, the third preset duration T3 is 5 minutes. In response to that the duration of outputting the first control signal is 5 minutes, the control apparatus 1011 should exit the rotational speed control, in other words, the control apparatus 1011 stops outputting the first control signal, and parks the vehicle stably in another manner, for example, a manner in which the braking system provides the braking force to implement parking.

In this embodiment, whether parking can be implemented through the rotational speed control is determined based on the output duration of the first drive current. When parking is difficult to be implemented through the rotational speed control, the rotational speed control is exited, to avoid a risk of system heat generation, and parking is implemented in another control manner.

### Embodiment 2

The control apparatus 1011 is configured to stop outputting the first control signal in response to that amplitude of the first drive current is greater than preset amplitude.

It may be understood that if the amplitude of the first drive current is greater than the preset amplitude, it indicates that it is difficult to park the vehicle through rotational speed control, and an excessively large current may cause the motor controller to generate heat. Therefore, in this working condition, the control apparatus 1011 needs to exit rotational speed control, and parking is implemented in another manner.

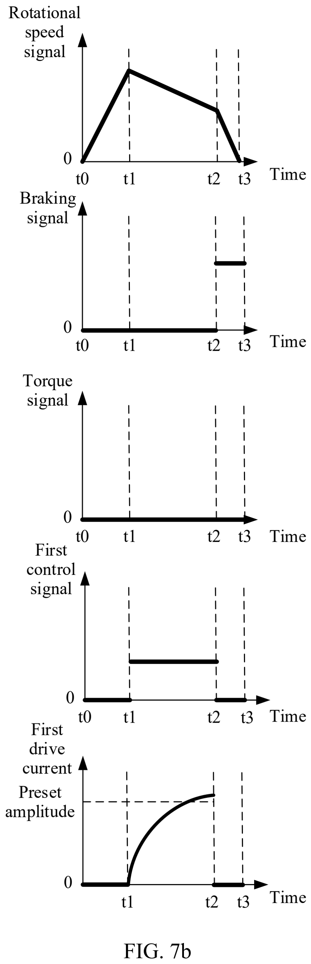

For example, when the electric vehicle is on a slope, the electric vehicle has an obvious tendency to slide downhill due to the steep slope. As shown in FIG. 7b, at the moment t0, the vehicle starts to slide, and the motor rotational speed indicated by the rotational speed signal gradually increases. At the moment t1, the braking force indicated by the braking signal is equal to zero, the rotational speed indicated by the rotational speed signal is greater than zero and less than the preset rotational speed, and the torque indicated by the torque signal is equal to zero. The control apparatus 1011 starts to output the first control signal. In a process of outputting the first control signal by the control apparatus 1011, if the amplitude of the first drive current is greater than the preset amplitude, it indicates that the vehicle cannot be parked on the slope through the rotational speed control of the control apparatus 1011, and the system has a risk of generating heat.

Therefore, if the rotational speed control is not exited and the vehicle is not parked on the slope in another control manner, there is a risk of slope sliding and a risk of overheating of the system. Therefore, at the moment t2, the control apparatus 1011 stops outputting the first control signal, and the first drive current decreases to zero. Further, the control apparatus 1011 may control vehicle parking in another manner. For example, as shown in FIG. 7b, at the moment t2, the vehicle is parked in a braking system control manner, the braking force indicated by the braking signal is greater than zero, the torque indicated by the torque signal is zero, and the rotational speed indicated by the rotational speed signal gradually decreases to zero, to park the vehicle stably.

For example, the preset amplitude of the first drive current is 20 amperes. Amplitude of the first drive current output by the inverter circuit 1012 is 21 amperes. In this case, the rotational speed control should be exited, in other words, the control apparatus 1011 stops outputting the first control signal, and prevents the electric vehicle from sliding in another manner.

In this embodiment, the amplitude of the first drive current is used as a determining condition, to avoid a risk of sliding caused by difficulty in parking the vehicle through the rotational speed control, and avoid a heat risk of the motor controller due to an excessively large current. Therefore, the control apparatus 1011 needs to exit the rotational speed control, and parking is implemented in another control manner.

### Embodiment 3

In a possible implementation, in response to that the rotational speed indicated by the rotational speed signal is greater than or equal to the preset rotational speed in a process of outputting the first control signal, the control apparatus 1011 is configured to stop outputting the first control signal.

It may be understood that, in a process in which the motor controller controls the rotational speed of the drive motor 102 to decrease to implement parking of the electric vehicle, if the rotational speed of the motor does not decrease but increases until the rotational speed exceeds the preset rotational speed, it indicates that it is difficult for the motor controller to control the motor rotational speed to decrease, and therefore difficult to implement parking. Therefore, in this working condition, the rotational speed control should be exited.

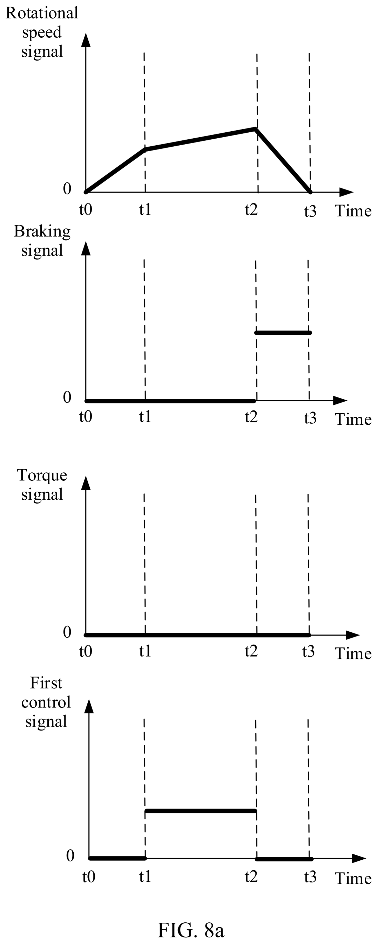

For example, when the electric vehicle is on a slope, the electric vehicle has an obvious tendency to slide downhill due to the steep slope. As shown in FIG. 8a, at the moment t0, the vehicle starts to slide, and the motor rotational speed indicated by the rotational speed signal gradually increases. At the moment t1, the braking force indicated by the braking signal is equal to zero, the rotational speed indicated by the rotational speed signal is greater than zero and less than the preset rotational speed, and the torque indicated by the torque signal is equal to zero. The control apparatus 1011 starts to output the first control signal, but at the moment t2, the rotational speed indicated by the rotational speed signal exceeds the preset rotational speed. This indicates that the vehicle cannot be parked on the slope through the rotational speed control of the control apparatus 1011.

Therefore, if the rotational speed control is not exited and the vehicle is not parked on the slope in another control manner, there is a risk of slope sliding. In this case, at the moment t2, the control apparatus 1011 stops outputting the first control signal. Further, the control apparatus 1011 may control vehicle parking in another manner. For example, as shown in FIG. 8a, at the moment t2, the vehicle is parked in a braking system control manner, the braking force indicated by the braking signal is greater than zero, the torque indicated by the torque signal is zero, and the rotational speed indicated by the rotational speed signal gradually decreases to zero, to park the vehicle stably.

For example, the preset rotational speed of the motor is 100 revolutions per minute. The motor rotational speed exceeds 100 revolutions per minute due to slope sliding. In response to that the rotational speed indicated by the rotational speed signal is greater than or equal to 100 revolutions per minute in the process of outputting the first control signal, the control apparatus 1011 exits the rotational speed control and prevents the electric vehicle from sliding in another control manner.

The motor controller provided in this embodiment of this application implements the parking function in another control manner when the vehicle cannot be parked through the rotational speed control. This improves parking safety.

In addition, in this embodiment of this application, a vehicle speed may alternatively be used as a determining condition. For example, in response to that the vehicle speed is greater than a preset vehicle speed in the process of outputting the first control signal, the control apparatus 1011 exits the rotational speed control, and implements parking in another control manner.

### Embodiment 4

The control apparatus 1011 is configured to stop outputting the first control signal in response to that duration in which the rotational speed indicated by the rotational speed signal is zero and the torque indicated by the torque signal is not zero is greater than fourth preset duration in the process of outputting the first control signal.

It may be understood that, in a process in which the control apparatus 1011 outputs the first control signal, if motor stall occurs, and a stall state lasts for a period longer than the fourth preset duration, the control apparatus 1011 needs to exit the rotational speed control, to avoid a risk of generating heat due to excessively long motor stall time.

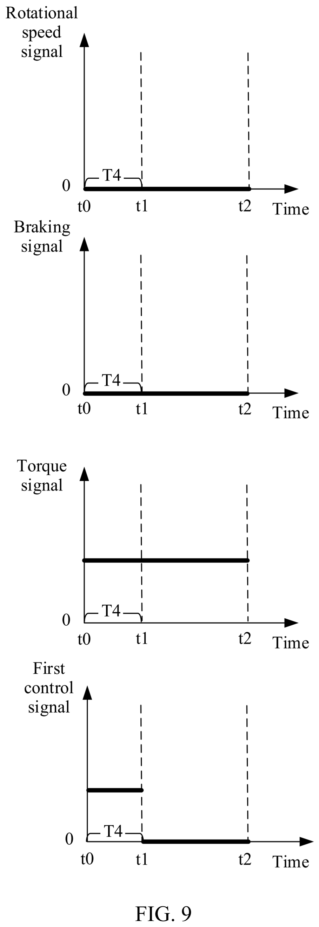

For example, the electric vehicle is in a parking state on a slope through the rotational speed control. As shown in FIG. 9, at the moment t0, the control apparatus 1011 outputs the first control signal, the rotational speed indicated by the rotational speed signal is zero, but the torque indicated by the torque signal is not zero. When duration in which the rotational speed indicated by the rotational speed signal is zero and the torque indicated by the torque signal is not zero is longer than the fourth preset duration, the vehicle is parked for a long time, the motor still continuously outputs torque when the rotational speed is zero, and the motor continuously generates heat. In this working condition, the control apparatus 1011 stops outputting the first control signal, and the vehicle is parked on the slope in another control manner.

For example, the fourth preset duration is 10 minutes. In a process in which the control apparatus 1011 performs rotational speed control to implement parking, if duration of motor stall exceeds 10 minutes, the control apparatus 1011 stops outputting the first control signal, and the vehicle is parked on the slope in another control manner.

The motor controller provided in this embodiment of this application implements the parking function in another control manner when motor stall time is excessively long. This improves parking safety.

The following describes how the motor controller implements parking in another control manner in the foregoing embodiment.

In a possible implementation, Embodiment 3 is used as an example. In response to that the rotational speed indicated by the rotational speed signal is greater than or equal to the preset rotational speed in the process of outputting the first control signal, the control apparatus 1011 is configured to output a braking request signal to the braking controller 307.

In a process in which the motor controller controls the rotational speed of the drive motor 102 to decrease to implement parking of the electric vehicle, if the rotational speed of the drive motor 102 is greater than the preset rotational speed, the control apparatus 1011 outputs the braking request signal to the braking controller 307. In response to the braking request signal, the braking controller 307 controls the braking system to output a braking force to control the motor rotational speed of the electric vehicle to decrease.

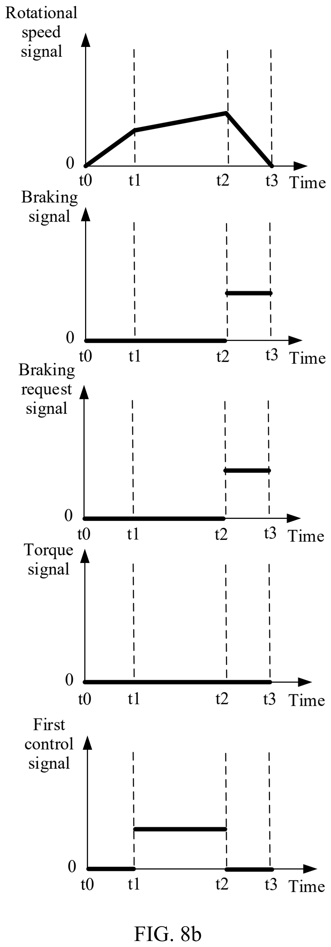

For example, when the electric vehicle is on a slope, the electric vehicle has an obvious tendency to slide downhill due to the steep slope. As shown in FIG. 8b, at the moment t0, the vehicle starts to slide, and the motor rotational speed indicated by the rotational speed signal gradually increases.

At the moment t1, the braking force indicated by the braking signal is equal to zero, the rotational speed indicated by the rotational speed signal is greater than zero and less than the preset rotational speed, and the torque indicated by the torque signal is equal to zero. The control apparatus 1011 starts to output the first control signal, but the rotational speed indicated by the rotational speed signal exceeds the preset rotational speed. This indicates that the vehicle cannot be parked on the slope through the rotational speed control of the control apparatus 1011.

At the moment t2, the control apparatus 1011 outputs the braking request signal to the braking controller 307. The braking force indicated by the braking signal is greater than zero, the torque indicated by the torque signal is zero, and the rotational speed indicated by the rotational speed signal continuously decreases to zero.

For example, the preset rotational speed of the motor is 100 revolutions per minute. The motor rotational speed exceeds 100 revolutions per minute due to slope sliding. In response to that the rotational speed indicated by the rotational speed signal is greater than or equal to 100 revolutions per minute in the process of outputting the first control signal, the control apparatus 1011 exits the rotational speed control and prevents the electric vehicle from sliding by providing a braking force by using the braking system.

The motor controller provided in this embodiment of this application sends a signal to the braking controller 307 to implement the vehicle parking function when parking cannot be implemented through the rotational speed control. This improves vehicle parking safety.

In addition, different from a braking request signal output by the vehicle controller unit 301 in the conventional technology, the braking request signal in this application is output by the motor controller. This can shorten a control path, implement fast braking, and further implement fast parking.

It should be noted that, in this embodiment of this application, the vehicle speed may alternatively be used as a determining condition. For example, in response to that the vehicle speed is greater than the preset vehicle speed in the process of outputting the first control signal, the control apparatus 1011 outputs the braking request signal to the braking controller 307.

It may be understood that the braking system parking manner is also applicable to another vehicle condition in which parking cannot be implemented through the rotational speed control.

Based on a same technical concept, the control apparatus 1011 may be further configured to output a manual braking signal in response to a vehicle condition in which the rotational speed indicated by the rotational speed signal is greater than or equal to the preset rotational speed in the process of outputting the first control signal and in which parking cannot be implemented through rotational speed braking, to remind the driver to perform manual braking to implement parking.

For example, the vehicle controller unit 301 receives the manual braking signal, and may send braking warning information to a dashboard, to remind the driver to pull the handbrake or press the brake, so as to implement parking. A human reaction is slower than a machine reaction, and shortening of the control path does not obviously improve a reaction speed of manual braking. Therefore, in terms of simplicity of the hardware design, the warning information is output by the vehicle controller unit 301.

In addition, if braking duration of a current braking manner is excessively long, the motor controller may stop the current braking manner, and send the manual braking signal to the vehicle controller unit 301 for replacement, thereby avoiding a system risk. For example, when a braking force of the brake pedal is greater than the preset braking force, the vehicle electronic stability program 302 triggers hydraulic braking. If hydraulic braking duration is excessively long, the motor controller sends the manual braking signal to the vehicle controller unit 301 to exit the hydraulic braking, and the driver is reminded by the vehicle controller unit 301 to perform manual braking to implement parking.

In a possible implementation, Embodiment 3 is used as an example. In response to that the rotational speed indicated by the rotational speed signal is greater than or equal to the preset rotational speed in the process of outputting the first control signal, the control apparatus 1011 is configured to output a gear control signal to the gear controller 304. The gear control signal is used to control the vehicle to operate in the parking gear.

In a process in which the motor controller controls the rotational speed of the drive motor 102 to decrease to implement parking of the electric vehicle, if the rotational speed of the drive motor 102 is greater than the preset rotational speed, the control apparatus 1011 outputs the gear control signal to the gear controller 304. In response to the gear control signal, the gear controller 304 controls the vehicle to operate in the parking gear.

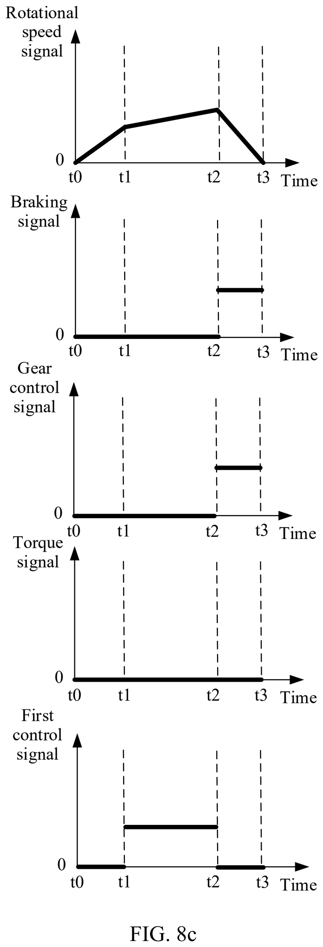

For example, when the electric vehicle is on a slope, the electric vehicle has an obvious tendency to slide downhill due to the steep slope. As shown in FIG. 8c, at the moment t0, the vehicle starts to slide, and the motor rotational speed indicated by the rotational speed signal gradually increases.

At the moment t1, the braking force indicated by the braking signal is equal to zero, the rotational speed indicated by the rotational speed signal is greater than zero and less than the preset rotational speed, and the torque indicated by the torque signal is equal to zero. The control apparatus 1011 starts to output the first control signal, but the rotational speed indicated by the rotational speed signal exceeds the preset rotational speed. This indicates that the vehicle cannot be parked on the slope through the rotational speed control of the control apparatus 1011.

At the moment t2, the control apparatus 1011 outputs the gear control signal to the gear controller 304. The braking force indicated by the braking signal is greater than zero, the torque indicated by the torque signal is zero, and the rotational speed indicated by the rotational speed signal continuously decreases to zero.

For example, the preset rotational speed of the motor is 100 revolutions per minute. The motor rotational speed exceeds 100 revolutions per minute due to slope sliding. In response to that the rotational speed indicated by the rotational speed signal exceeds 100 revolutions per minute in the process of outputting the first control signal, the control apparatus 1011 exits the rotational speed control and outputs the gear control signal to the gear controller 304, to prevent the electric vehicle from sliding by controlling the vehicle to operate in the parking gear.

The motor controller provided in this embodiment of this application outputs the gear control signal to the gear controller 304 to implement the vehicle parking function when parking cannot be implemented through the rotational speed control. This improves vehicle parking safety.

In addition, different from a gear control signal output by the vehicle controller unit 301 in the conventional technology, the gear control signal in this application is output by the motor controller. This can shorten a control path, implement fast braking, and further implement fast parking.

It should be noted that, in this embodiment of this application, the vehicle speed may alternatively be used as a determining condition. For example, in response to that the vehicle speed is greater than the preset vehicle speed in the process of outputting the first control signal, the control apparatus 1011 outputs the gear control signal to the gear controller 304.

It may be understood that the foregoing manner of controlling the vehicle to be in the parking state is not only applicable to a vehicle condition in which the rotational speed of the motor is greater than or equal to the preset rotational speed, but also applicable to another vehicle condition in which parking cannot be implemented through the rotational speed control.

### 3. The motor controller assists the driver to implement a parking manner indicated by the driver

### Embodiment 1

In response to that the torque indicated by the torque signal is greater than zero in the process of outputting the first control signal, the control apparatus 1011 is configured to stop outputting the first control signal and output a second control signal.

It should be noted that the second control signal is used to control the inverter circuit 1012 to output a second drive current. The second drive current is used to adjust output torque of the drive motor 102 to the torque indicated by the torque signal.

It may be understood that, in a process in which the control apparatus 1011 outputs the first control signal, if the torque indicated by the torque signal is greater than or equal to the preset torque, it indicates that required torque of the vehicle is large. In this case, the control apparatus 1011 needs to exit the rotational speed control and respond to a torque requirement of the vehicle, to avoid conflict with the intention of the driver.

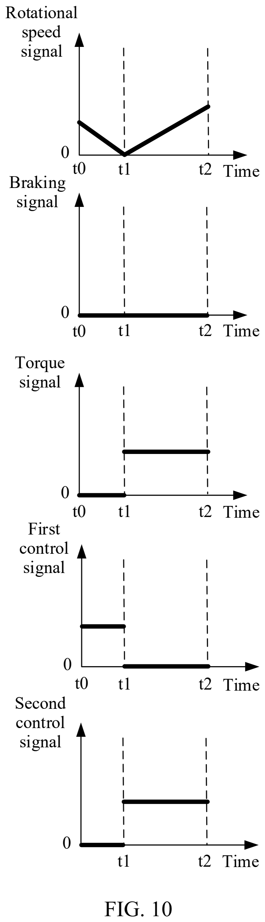

For example, in a scenario in which parking is implemented through the rotational speed control, as shown in FIG. 10, at the moment t0, the control apparatus 1011 outputs the first control signal. The torque indicated by the torque signal is zero, and the braking force indicated by the braking signal is zero. Under the rotational speed control of the control apparatus 1011, the rotational speed indicated by the rotational speed signal gradually decreases to zero. At the moment t1, the driver interrupts parking and starts to drive. The torque indicated by the torque signal is greater than zero, the braking force indicated by the braking signal is zero, and the control apparatus 1011 stops outputting the first control signal, and outputs the second control signal for torque control. The vehicle travels under torque control, and the rotational speed indicated by the rotational speed signal gradually increases.

For example, when the vehicle is in the parking state, the driver does not want to continue parking and wants to control the vehicle to travel, the accelerator pedal is pressed, and the torque indicated by the torque signal is 200 N/m. In this case, the control apparatus exits the rotational speed control, and controls the vehicle to travel based on 200 N/m.

Alternatively, when the vehicle is on a slope, the driver wants to park the vehicle through torque control, and presses the accelerator pedal. The torque indicated by the torque signal is 200 N/m. In this case, the control apparatus exits the rotational speed control, and controls the vehicle to travel based on 200 N/m.

The motor controller provided in this embodiment of this application accurately stops rotational speed control by determining a change of the torque signal, to avoid a conflict with the intention of the driver.

### Embodiment 2

The control apparatus 1011 is configured to stop outputting the first control signal in response to that the braking force indicated by the braking signal is greater than zero in the process of outputting the first control signal.

It may be understood that, in the process in which the control apparatus 1011 outputs the first control signal, if the braking force indicated by the braking signal is greater than zero, it indicates that the driver performs an operation like pressing the brake or pulling the handbrake. In this case, the rotational speed control should be exited to avoid conflict with the intention of the driver.

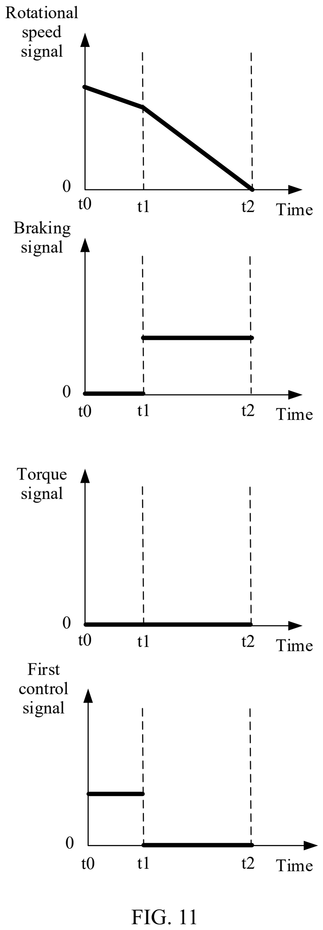

For example, the control apparatus 1011 controls the motor rotational speed to continuously decrease. As shown in FIG. 11, at the moment t0, the control apparatus 1011 outputs the first control signal. The torque indicated by the torque signal is zero, and the braking force indicated by the braking signal is zero. Under the rotational speed control of the control apparatus 1011, the rotational speed indicated by the rotational speed signal gradually decreases.

At the moment t1, when the driver wants to brake the vehicle in a braking manner, when the brake pedal is pressed, the braking force indicated by the braking signal is greater than zero, the torque indicated by the torque signal is equal to zero, and the control apparatus 1011 exits the motor rotational speed control, in other words, stops outputting the first control signal. Under influence of the braking force, the rotation speed signal continuously decreases to zero to implement parking.

In addition, if the Autohold function of the vehicle is enabled, when the driver presses the brake pedal, the ESP maintains brake hydraulic pressure at a wheel end, and automatic parking can be implemented without operations such as putting into the P gear, pulling the handbrake or activating the EPB.

For example, in a process of implementing parking through the rotational speed control, the rotational speed of the drive motor gradually decreases from 50 revolutions per minute to 20 revolutions per minute. In this case, the driver presses the brake pedal, and the control apparatus exits the rotational speed control. The ESP implements braking by clamping a brake caliper or a brake disc by using the hydraulic pressure of a hydraulic system, and the motor rotational speed decreases to zero to implement parking.

The motor controller provided in this embodiment of this application accurately stops the rotational speed control by determining a change of the braking signal, to avoid a conflict with the intention of the driver.

### Embodiment 3

In response to receiving the gear signal in the process of outputting the first control signal, the control apparatus 1011 is configured to stop outputting the first control signal. A gear indicated by the gear signal is the P gear.

It may be understood that, in the process in which the control apparatus 1011 outputs the first control signal, if the gear indicated by the gear signal is the P gear, it indicates that the driver puts into the P gear. In this case, the rotational speed control should be exited to avoid conflict with the intention of the driver.

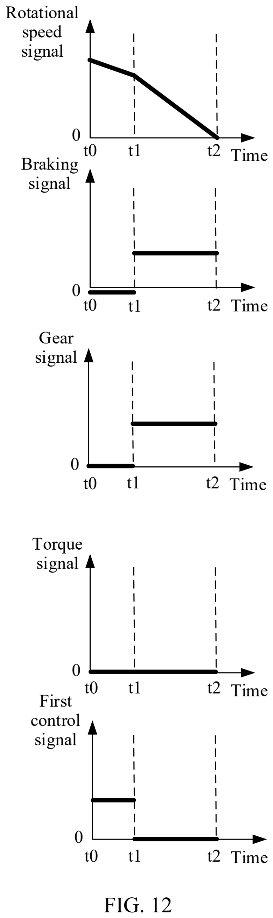

For example, the control apparatus 1011 controls the motor rotational speed to continuously decrease. As shown in FIG. 12, at the moment t0, the control apparatus 1011 outputs the first control signal. The torque indicated by the torque signal is zero, and the braking force indicated by the braking signal is zero. Under the rotational speed control of the control apparatus 1011, the rotational speed indicated by the rotational speed signal gradually decreases.

At the moment t1, the driver puts into the P gear to activate the EPB to park the vehicle, and vehicle braking is controlled by a brake caliper motor. The braking force indicated by the braking signal is greater than zero, the torque indicated by the torque signal is equal to zero, and the gear indicated by the gear signal is the P gear. The control apparatus 1011 exits the motor rotational speed control, in other words, stops outputting the first control signal, and implements parking based on the intention of the driver. The rotational speed signal continuously decreases to zero, and the vehicle is parked stably.

For example, in a process of implementing parking through the rotational speed control, the rotational speed of the drive motor gradually decreases from 50 revolutions per minute to 20 revolutions per minute. In this case, the driver presses a parking button, the control apparatus exits the rotational speed control, the EPB is activated, and the vehicle is braked by using the motor against the brake disc. The motor rotational speed decreases to zero to implement parking.

The motor controller provided in this embodiment of this application accurately stops the rotational speed control by determining a change of the gear signal, to avoid a conflict with the intention of the driver.

In conclusion, this application discloses a motor controller, which can quickly and accurately implement vehicle parking in all scenarios, such as a scenario of parking a vehicle by releasing an accelerator at a low speed on a slope and a scenario of parking a vehicle on a slope for a long time. Then, the motor controller disclosed in this application may further resolve a problem of a slow parking response speed by shortening a control path based on this. In addition, in this application, for the scenario of parking a vehicle on a slope for a long time, a parking requirement may be determined without a slope of the slope. Therefore, no additional slope sensor needs to be configured. This reduces hardware costs. Finally, the motor controller in this application has a low requirement for the vehicle. In most scenarios, the motor controller may implement parking by controlling the rotational speed, and the vehicle does not need to be configured with another complex parking or braking function. In addition, the motor controller may also assist another system in implementing parking.

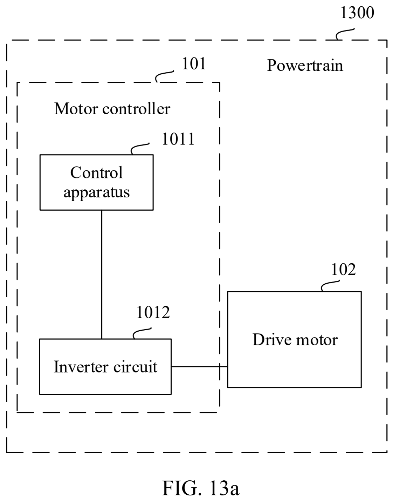

Based on a same inventive concept, as shown in FIG. 13a, an embodiment of this application further provides a powertrain. The powertrain 1300 includes the motor controller 101 and the drive motor 102 shown in FIG. 1. For implementation of the powertrain 1300, refer to related descriptions of the motor controller 101. Details are not described herein again.

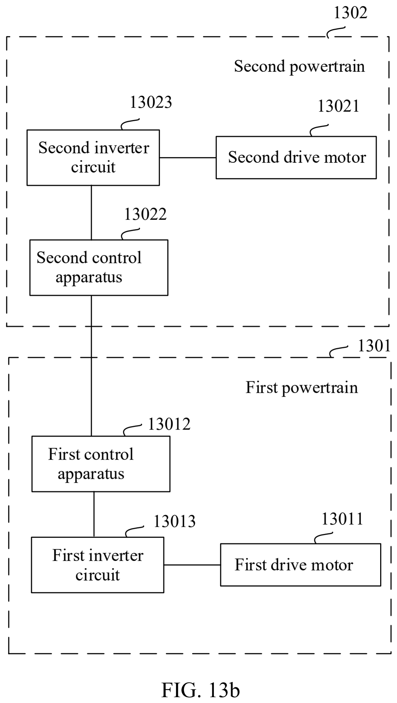

It should be noted that the powertrain 1300 is a single motor powertrain, and this application may be further applied to two powertrains shown in FIG. 13b. For ease of understanding, the two powertrains are divided into a first powertrain 1301 and a second powertrain 1302. A drive motor in the first powertrain 1301 is a first drive motor 13011, a control apparatus is a first control apparatus 13012, and an inverter circuit is a first inverter circuit 13013. A drive motor in the second powertrain 1302 is a second drive motor 13021, a control apparatus is a second control apparatus 13022, and an inverter circuit is a second inverter circuit 13023.

The first control apparatus 13012 is configured to send a compensation signal to the second control apparatus 13022 in response to that a rotational speed that is of the first drive motor 13011 and that is indicated by a rotational speed signal is greater than or equal to a preset rotational speed in a process of outputting a first control signal by the first drive motor 13011.

The second control apparatus 13022 is configured to control the second drive motor 13021 to perform rotational speed braking in response to the compensation signal.

For example, in a scenario in which a slope is steep or a road surface is slippery, the first drive motor 13011 has reached maximum torque under rotational speed control of the first control apparatus 13012. The rotational speed cannot be controlled to zero, and the vehicle cannot be braked to implement parking. The first control apparatus 13012 may send the compensation signal to the second control apparatus 13022, to request the second drive motor 13021 to assist in rotational speed braking.

It may be understood that, if parking cannot be implemented when two powertrains perform rotational speed control, the rotational speed control may be exited with reference to embodiments related to a single motor controller, and parking may be implemented in another control manner.

Similarly, if a driver indicates a parking manner when the two powertrains perform the rotational speed control, the rotational speed control may be exited with reference to a function of the single motor controller, and the parking manner indicated by the driver may be assisted.

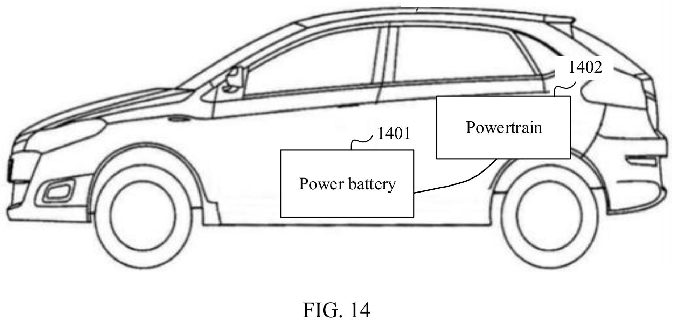

Based on a same invention concept, an embodiment of this application further provides a vehicle. As shown in FIG. 14, the vehicle includes a power battery 1401 and a powertrain 1402. The power battery 1401 is configured to supply power to an inverter circuit of the powertrain 1402. For a specific implementation, refer to descriptions corresponding to FIG. 2.

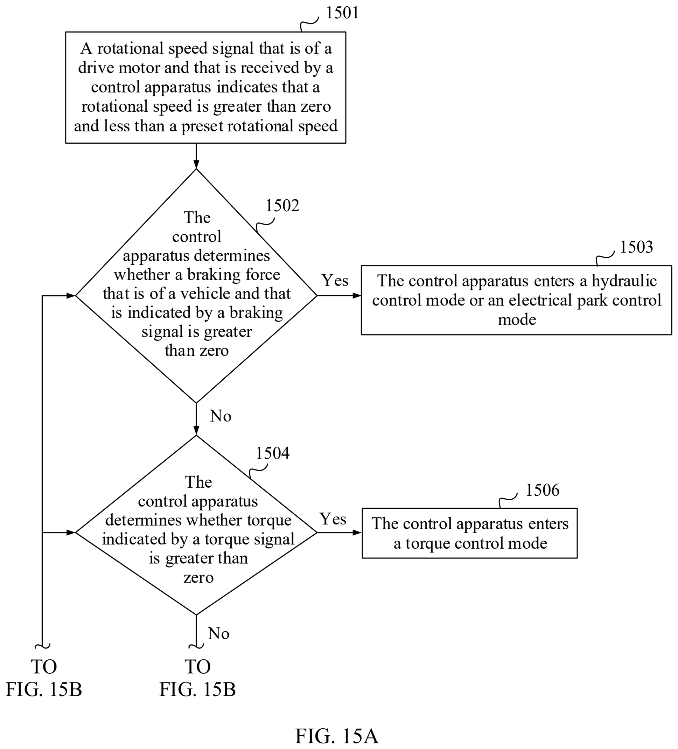

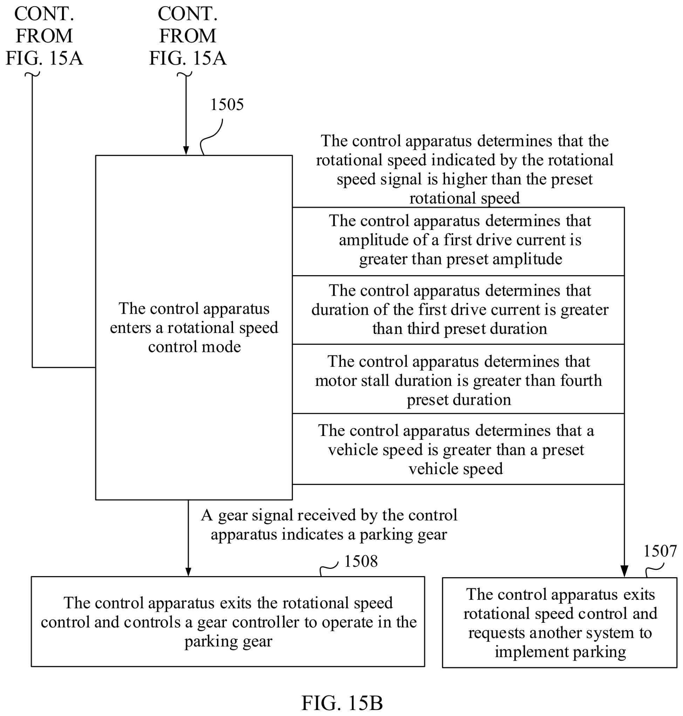

Based on a same invention concept, an embodiment of this application further provides a parking method, applied to the motor controller shown in FIG. 1. For implementation of the parking method, refer to the foregoing embodiment of the motor controller. Repeated parts are not described again. As shown in FIG. 15A and FIG. 15B, the method includes the following steps.

Step 1501: A rotational speed signal that is of a drive motor and that is received by a control apparatus indicates that a rotational speed is greater than zero and less than a preset rotational speed.

Step 1502: The control apparatus determines whether a braking force that is of a vehicle and that is indicated by a braking signal is greater than zero. If yes, step 1503 is performed; otherwise, step 1504 is performed.

Step 1503: The control apparatus enters a hydraulic control mode or an electrical park control mode.

For example, a driver presses a brake pedal, and the control apparatus outputs a hydraulic control signal, so that a hydraulic system controls and clamps a brake caliper or a brake disc to implement parking. Alternatively, the driver pulls down a handbrake, the control apparatus outputs an electronic park signal, and parking is implemented by using the motor against the brake disc.

Step 1504: The control apparatus determines whether torque indicated by a torque signal is greater than zero. If yes, step 1506 is performed; otherwise, step 1505 is performed.

Step 1505: The control apparatus enters a rotational speed control mode, and performs step 1502 and step 1504 in a rotational speed control process.

In the rotational speed control process, if the control apparatus determines that motor stall duration is greater than fourth preset duration, or the control apparatus determines that the rotational speed indicated by the rotational speed signal is greater than the preset rotational speed, or the control apparatus determines that a vehicle speed is greater than a preset vehicle speed, or the control apparatus determines that amplitude of a first drive current is greater than preset amplitude, or the control apparatus determines that duration of the first drive current is greater than third preset duration, step 1507 is performed.

In the rotational speed control process, if a gear signal received by the control apparatus indicates a parking gear, step 1508 is performed.

Step 1506: The control apparatus enters a torque control mode.

Step 1507: The control apparatus exits the rotational speed control, and requests another system to implement parking.

The following uses an example in which the control apparatus determines that the rotational speed indicated by the rotational speed signal is greater than the preset rotational speed for description.

In a possible implementation, the control apparatus is configured to output a braking request signal to a braking controller in response to that the rotational speed indicated by the rotational speed signal is greater than or equal to the preset rotational speed in a process of outputting a first control signal.

For example, the preset rotational speed of the motor is 100 revolutions per minute. In response to that the rotational speed indicated by the rotational speed signal is greater than or equal to 100 revolutions per minute in the process of outputting the first control signal, the control apparatus exits the rotational speed control, and enters the hydraulic control mode or the electrical park mode to prevent the electric vehicle from sliding.

In a possible implementation, in response to that the rotational speed indicated by the rotational speed signal is greater than or equal to the preset rotational speed in the process of outputting the first control signal, a gear control signal is output to a gear controller. The gear control signal is used to control the vehicle to operate in the parking gear.

For example, the preset rotational speed of the motor is 100 revolutions per minute. In response to that the rotational speed indicated by the rotational speed signal is greater than or equal to 100 revolutions per minute in the process of outputting the first control signal, the control apparatus 1011 exits the rotational speed control, and outputs the gear control signal to the gear controller, to prevent the electric vehicle from sliding by controlling the vehicle to operate in the parking gear.

In a possible implementation, the control apparatus is configured to output a manual braking signal in response to a vehicle condition in which the rotational speed indicated by the rotational speed signal is greater than or equal to the preset rotational speed in the rotational speed control process and in which parking cannot be implemented through another rotational speed braking, to remind the driver to perform manual braking to implement parking.

Step 1508: The control apparatus exits the rotational speed control, and controls the gear controller to operate in the parking gear.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A motor controller used in a drive motor, wherein the motor controller comprises a control apparatus and an inverter circuit;
the control apparatus is configured to receive a braking signal, a rotational speed signal, and a torque signal, wherein the braking signal indicates a braking force of a vehicle, the rotational speed signal indicates a rotational speed of the drive motor, the torque signal indicates torque of the drive motor, the inverter circuit comprises a multi-phase bridge arm, and a bridge arm midpoint of the multi-phase bridge arm is configured to connect to a multi-phase winding of the drive motor; and
the control apparatus is configured to:
output a first control signal in response to that the braking signal, the torque signal, and the rotational speed signal meet a first preset condition, wherein the first control signal is used to control the inverter circuit to reduce the rotational speed of the drive motor, and the first preset condition comprises:
the braking force indicated by the braking signal is less than a preset braking force, the rotational speed indicated by the rotational speed signal is greater than zero and less than a preset rotational speed, and the torque indicated by the torque signal is less than preset torque.

2. The motor controller according to claim 1, wherein the first preset condition comprises:
the rotational speed indicated by the rotational speed signal continuously decreases within first preset duration.

3. The motor controller according to claim 1, wherein the control apparatus is configured to receive a first braking signal and a second braking signal in sequence, wherein a braking force indicated by the first braking signal is greater than the preset braking force, and a braking force indicated by the second braking signal is zero; and the control apparatus is configured to:
output the first control signal in response to that duration of the second braking signal is longer than first preset duration, the torque indicated by the torque signal within the first preset duration is zero, and the motor rotational speed indicated by the rotational speed signal within the first preset duration is greater than zero and less than the preset rotational speed.

4. The motor controller according to any one of claims 1 to 3, wherein the control apparatus is configured to:
stop outputting the first control signal in response to that the rotational speed indicated by the rotational speed signal is greater than or equal to the preset rotational speed in a process of outputting the first control signal.

5. The motor controller according to any one of claims 1 to 4, wherein the control apparatus is configured to:
stop outputting the first control signal, and output a second control signal in response to that the torque indicated by the torque signal is greater than zero in the process of outputting the first control signal, wherein the second control signal is used to control the inverter circuit to output a second drive current, and the second drive current is used to adjust output torque of the drive motor to the torque indicated by the torque signal.

6. The motor controller according to any one of claims 1 to 5, wherein the control apparatus is configured to:
stop outputting the first control signal in response to that the braking force indicated by the braking signal is greater than or equal to the preset braking force in the process of outputting the first control signal.

7. The motor controller according to any one of claims 1 to 6, wherein the control apparatus is configured to:
stop outputting the first control signal in response to receiving a first gear signal in the process of outputting the first control signal, wherein a gear indicated by the first gear signal is a parking gear.

8. The motor controller according to any one of claims 1 to 7, wherein the inverter circuit is configured to:
output a first drive current in response to the first control signal, wherein the first drive current is used to control the drive motor to reduce the rotational speed.

9. The motor controller according to any one of claims 1 to 8, wherein the control apparatus is configured to:
stop outputting the first control signal in response to that duration in which the inverter circuit outputs the first drive current is longer than third preset duration.

10. The motor controller according to any one of claims 1 to 9, wherein the control apparatus is configured to:
stop outputting the first control signal in response to that duration in which the rotational speed indicated by the rotational speed signal is zero and the torque indicated by the torque signal is not zero is longer than fourth preset duration in the process of outputting the first control signal.

11. The motor controller according to any one of claims 1 to 10, wherein the control apparatus is configured to:
stop outputting the first control signal in response to that amplitude of the first drive current is greater than preset amplitude.

12. The motor controller according to any one of claims 1 to 11, wherein the control apparatus is configured to:
output a braking request signal to a braking controller in response to that the rotational speed indicated by the rotational speed signal is greater than or equal to the preset rotational speed in the process of outputting the first control signal, wherein the braking request signal is used to control a braking system to output a braking force.

13. A powertrain, wherein the powertrain comprises the motor controller according to any one of claims 1 to 12 and a drive motor, a motor rotational speed sensor is disposed in the drive motor, and the motor controller is configured to receive a motor rotational speed signal of the motor rotational speed sensor.

14. A vehicle, wherein the vehicle comprises a power battery and the powertrain according to claim 13, and the power battery is configured to supply power to the powertrain.
